Europäisches Patentamt

European Patent Office

Office européen des brevets

(11) Veröffentlichungsnummer: **0 519 166 A1**

## EUROPÄISCHE PATENTANMELDUNG

(21) Anmeldenummer: **92105183.5**

(22) Anmeldetag: **26.03.92**

(51) Int. Cl.5: **B65B 1/02**, B31B 19/00, B65D 75/58

(30) Priorität: **17.06.91 CH 1794/91**

(43) Veröffentlichungstag der Anmeldung:
**23.12.92 Patentblatt 92/52**

(84) Benannte Vertragsstaaten:
**AT DE DK FR IT**

(71) Anmelder: **Richard Geissler AG**
**Goldbrunnenstrasse 157**
**CH-8055 Zürich(CH)**

(72) Erfinder: **Bäumli, Ernst**
**Baumgartenstrasse 4**
**CH-8625 Gossau(CH)**

(74) Vertreter: **Hunziker, Jean**
**Patentanwaltsbureau Jean Hunziker**
**Schulhausstrasse 12**
**CH-8002 Zürich(CH)**

(54) Verfahren zur Herstellung einer verkaufsfertigen, wiederverschliessbaren Samentüte.

(57) Auf einer Fliessbandanlage (20) mit mehreren Bearbeitungsstationen (21→34) und Transportmitteln zwischen denselben werden folgende Arbeitsgänge durchgeführt:

Zubringen eines dreiseitig verschlossenen Rohlings zur ersten Bearbeitungsstation (21) und Aufbringen einer Haftschicht (9) auf einer Fläche in einem Bereich zwischen einer Aufreisslinie (12) und dem Tütenboden;

Positionieren des Rohlings mit der offenen Kante nach oben; Prägen aktueller Angaben auf den Rohling;

Aufbringen eines immer wieder haftenden Haftklebers (9) an einer für die Aufnahme eines Etiketts bestimmten Stelle des Rohlings;

Aufbringen eines vereinzelt zugeführten Holzetiketts (11) auf die vorgeleimte Stelle;

Spreizen der offen verbliebenen Randkanten zur Bildung einer Einfüllöffnung und Einbringen einer dosierten Charge Saatgut;

Aufbringen eines Leimstreifens entlang einer Randlinie der Einfüllöffnung;

Aufpressen eines Lappens auf den Leimstreifen zur Schliessung der Einfüllöffnung;

Kontrolle der fertiggestellten Samentüte;

Auswerfen der als einwandfrei befundenen Samentüten;

Auswerfen der bei der Kontrolle als fehlerhaft befundenen Samentüten.

Auf diese Weise wird aus einem Rohling vollautomatisch eine verkaufsfertige, nach dem ersten Oeffnen mehrfach wiederverschliessbare Samentüte hergestellt

Fig.3

Rank Xerox (UK) Business Services

Fig.1

Fig.2

Die Erfindung bezieht sich auf ein Verfahren zur Herstellung einer verkaufsfertigen, wiederverschliessbaren Samentüte nach dem Oberbegriff des Anspruchs 1.

Eine solche Samentüte ist in der CH-PS 674 192 beschrieben.

Die Herstellung dieser Samentüten, bei denen es sich um einen ausgesprochenen Massenartikel handelt, ist sehr zeitaufwendig. Besondere Schwierigkeiten ergeben sich dabei beim Aufbringen und genauen Positionieren der Haftschicht sowie beim Vereinzeln und Aufkleben auf die einzelnen Tüten der als Stapel zugelieferten Holzetiketten. Diese Schwierigkeiten waren es, weshalb bisher eine, an sich sehr wünschenswerte, Automatisierung der Herstellung solcher Samentüten unterblieb.

Die Erfindung löst nun die Aufgabe ein Verfahren zu schaffen, welches die vollautomatische Herstellung solcher Samentüten vom Papierzuschnitt bis und mit Füllung und Preisauszeichnung sowie Anbringung des Holzetiketts erlaubt.

Diese Aufgabe wird durch die im kennzeichnenden Teil des Anspruchs 1 angegebenen Verfahrenschritte gelöst.

In einer der Positionierung des Rohlings nachfolgenden zusätzlichen Bearbeitungsstation kann ausserdem oberhalb der Aufreisslinie eine Aufhängeöffnung eingestanzt werden

An einer weiteren zusätzlichen Bearbeitungsstation können aktuelle Angaben auch noch auf die andere Seite des Rohlings geprägt werden.

Das erfindungsgemässe Verfahren wird im Folgenden anhand eines Ausführungsbeispiels mit Bezug auf die Zeichnung näher erläutert. Es zeigt:

Fig.1 eine Draufsicht auf die Rückseite einer nach dem erfindungsgemässen Verfahren hergestellte Samentüte,

Fig.2 einen Schnitt nach der Linie II-II der Fig.1, und

Fig. 3 ein Schema einer Fliessbandanlage zur Durchführung des erfindungsgemässen Verfahrens.

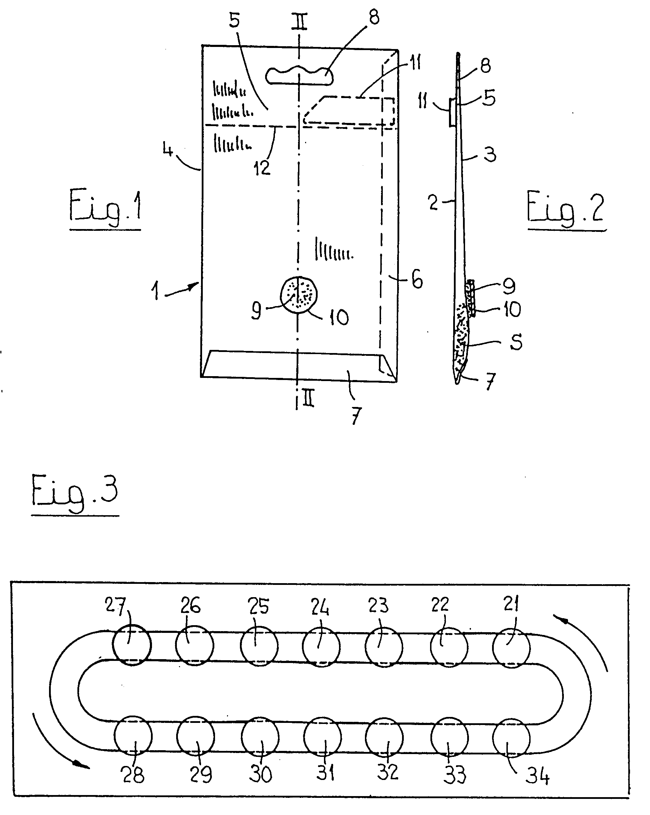

Die in den Fig. 1 und 2 dargestellte Samentüte ist aus einem rechteckigen, einmal auf sich selbst zurückgefalteten Papierzuschnitt 1 gebildet. Die beiden beidseits der Faltlinie 4 aufeinanderliegenden Teile 2 und 3 dieses Zuschnitts 1 bilden die Vorder- und Rückseite der Tüte und sind entlang ihren offenen Ränder bei 5 miteinander verklebt bzw. mittels zurückgebogenen, und aufgeklebten Lappen 6 und 7 miteinander verbunden. Die in dieser Weise allseits geschlossene Samentüte enthält Saatgut S und ist zweckmässig wie üblich mit primären Angaben über Inhalt, Kulturhinweisen u.dgl. sowie mit sekundären Angaben wie Preis und Aufbrauchsdatum versehen. Zum Zweck ihrer Aufhängung an den Haken üblicher Verkaufsgestelle ist eine Aufhängeöffnung 8 angebracht. Um das Oeffnen der Tüte zwecks Aussaat ihres Inhalts zu erleichtern ist eine parallel zu einem Rand der Tüte unterhalb der Verleimung 5 dieser Kante verlaufende Aufreisslinie 12 vorhanden.

Die eine Seite, hier die Rückseite 3, der Tüte trägt eine punktförmige Haftschicht 9 aus einem immer wieder haftenden Haftkkleber, die durch einen abziehbaren Schutzstreifen 10 abgedeckt ist. Des weiteren ist auf der einen Seite der Samentüte, hier auf der Vorderseite 2, ein Holzetikett 11 lösbar befestigt, beispielsweise wiederum durch einen immer wieder haftenden Kleber. Dieses Etikett ist zweckmässig als Einstecketikett mit einer Spitze versehen und trägt eine Beschriftung, die das in der Samentüte befindliche Saatgut bezeichnet.

Zum Aussäen der in der Tüte befindlichen Samen wird die Tüte entlang der Aufreisslinie 12 geöffnet und die benötigte Menge des Saatguts S auf das vorbereitete Kultursubstrat gestreut. Das Holzetikett 11 kann von der Tüte abgelöst und im Bereich der Aussaat in das Kultursaat gesteckt werden. Hierauf kann zum Schutz des in der Tüte verbleibenden Saatguts S der die Entnahmeöffnung aufweisende Teil der Tüte so zurückgefaltet werden, dass er die, gegebenenfalls vom Schutzstreifen 10 befreite Haftschicht 9 abdeckt. Durch leichtes Andrücken kann so die Tüte mehrfach wieder verschlossen werden.

In Fig. 3 ist schematisch eine Fliessbandanlage 20 zur vollautomatischen Herstellung solcher Samentüten vom bedruckten Papierzuschnitt bis zum verkaufsfertigen, kontrollierten Produkt dargestellt. Die Anlage umfasst vierzehn in der Figur nur schematisch angedeutete Bearbeitungsstationn 21 bis 34, zu denen die Rohlinge über nicht dargestellte Transportmittel schrittweise fortlaufend nacheinander zugeführt und an welchen jeweils die nachstehend näher bezeichneten Arbeitsgänge durchgeführt werden.

Eine nicht näher dargestellte Zuführeinrichtung, z.B. eine Saugeinrichtung entnimmt die Rohlinge einzeln einem Magazin und führt sie der ersten Bearbeitungsstation 21 und den Transportmitteln der Anlage zu. Die aus dem Magazin an diese Bearbeitungsstation gelangenden Rohlinge sind bereits mit den primären Angaben wie Inhalt, Kulturhinweise etc. bedruckt und bis auf ihren Lappen 7 verklebt. An der Bearbeitungsstation 21 wird auf die Rohlingrückseite der Haftkleberpunkt 9 und der Schutzstreifen 10 aufgebracht. Danach wird der Rohling zur Bearbeitungsstation 22 transportiert. Hier wird der Rohling auf den Transportmitteln der Fliessbandanlage 20 mit der verbliebenen Oeffnung nach oben gerichtet positioniert, damit die nachfolgenden Bearbeitungsgänge präzis an der richtigen Stelle der entstehenden Tüte erfolgen. Der in dieser Weise positionierte Rohling wird dann durch die Transportmittel der Fliessbandanlage 20 zur

3

Bearbeitungsstation 23 transportiert, wo eine Stanzvorrichtung die Aufhängeöffnung 8 ausstanzt. Nach dem nächsten Transportschritt der Anlage befindet sich der Rohling an der Bearbeitungsstation 24. Hier werden die sekundären, aktuellen Angaben, wie Preis und Abfüll- oder Aufbrauchdatum aufgeprägt. Die nächste Bearbeitungsstation 25, die auch entfallen kann, ist ebenfalls eine Prägestation, an welcher allfällige weitere aktuelle Angaben auf die andere Seite des Rohlings aufgebracht werden können. Dieser befindet sich dann am Ende des nächsten Transportschrittes in der Bearbeitungsstation 26. Hier wird an der vorgesehenen Stelle der Haftkleber zur lösbaren Befestigung des Holzetiketts 11 auf die Vorderseite des Rohlings aufgebracht. An der nächsten Bearbeitungsstation 27 dann wird ein ab Stapel vereinzeltes Holzetikett 11 zugeführt und auf dem Rohling befestigt. Danach wird der Rohling zur Bearbeitungsstation 28 transportiert, wo er zur Bildung einer Einfüllöffnung an der offen verbliebenen Randkante gespreizt wird und über eine nicht näher dargestellte Dosieranlage eine Saatgutfüllung erhält. Die nächste Bearbeitungsstation 29 dient zum Vorbiegen des Lappens 7 und die weitere Bearbeitungsstation 30 zum Anbringen von Leim an der Stelle, an welcher an der Bearbeitungsstation 31 der Lappen 7 auf die Rückseite 3 gepresst und die abgefüllte Tüte verschlossen wird. Die verbleibenden drei Bearbeitungsstationen dienen, Bearbeitungsstation 32, der Kontrolle der nunmehr verkaufsfertig erstellten Samentüten, insbesondere auf das Vorhandensein einer Saatgutfüllung, dem Auswerfen, Bearbeitungsstation 33, der als einwandfrei befundenen Samentüten, und dem Auswerfen, Bearbeitungsstation 34, der bei der Kontrolle ausgeschiedenen, beispielsweise leeren Samentüten.

**Patentansprüche**

1.  Verfahren zur Herstellung einer verkaufsfertigen, nach dem ersten Oeffnen mehrfach wiederverschliessbaren Samentüte, die aus zwei entlang ihrer Ränder miteinander verbundenen Teilen (2,3) besteht, zwischen welchen sich Saatgut (S) befindet, wobei zu ihrer ersten Oeffnung eine Aufreisslinie (12) vorgesehen ist, und wobei an der Aussenseite eines der beiden Teile zwischen Aufreisslinie (12) und Tütenboden eine Haftschicht (9) aus einem immer wieder haftenden Haftkleber angeordnet ist, welche Haftschicht beim Wiederverschliessen mit einem umgebogenen Bereich der Samentüte zusammenwirkt und an der Aussenseite eines Teiles der Samentüte ein Einstek-ketikett (11) lösbar befestigt ist, dadurch ge-kennzeichnet, dass zur vollautomatischen Her-stellung einer solchen Samentüte auf einer

Fliessbandanlage mit mehreren Bearbeitungs-stationen und Transportmitteln zwischen den-selben mindestens folgende Arbeitsgänge durchgeführt werden:

Zubringen eines dreiseitig verschlossenen Rohlings zur ersten Bearbeitungsstation (21) und Aufbringen der Haftschicht (9) auf einen der beiden Teile (2,3) in einem Bereich zwischen Aufreisslinie (12) und Tütenboden;

Positionieren des Rohlings mit der offenen Kante nach oben;

Prägen aktueller Angaben auf den Rohling;

Aufbringen eines immer wieder haftenden Haftklebers an der für die Aufnahme des Etiketts bestimmten Stelle des Rohlings;

Aufbringen eines vereinzelt zugeführten Holzetiketts auf die vorgeleimte Stelle;

Spreizen der offen verbliebenen Randkanten zur Bildung einer Einfüllöffnung und Einbringen einer dosierten Charge Saatgut;

Aufbringen eines Leimstreifens entlang einer Randlinie der Einfüllöffnung;

Aufpressen des Lappens auf den Leimstreifen zur Schliessung der Einfüllöffnung;

Kontrolle der fertiggestellten Samentüte;

Auswerfen der als einwandfrei befundenen Samentüten;

Auswerfen der bei der Kontrolle als fehlerhaft befundenen Samentüten.

2.  Verfahren nach Anspruch 1, dadurch gekennzeichnet, dass an einer der Positionierung des Rohlings nachfolgenden Bearbeitungsstation oberhalb der Aufreisslinie eine Aufhängeöffnung eingestanzt wird

3.  Verfahren nach Anspruch 1 oder 2, dadurch gekennzeichnet dass an einer zusätzlichen Bearbeitungsstation weitere aktuelle Angaben auf die andere Seite des Rohlings geprägt werden.

4.  Verfahren nach einem der Ansprüche 1 bis 3, dadurch gekennzeichnet, dass vor dem Aufbringen eines Leimstreifens entlang einer Randlinie der Einfüllöffnung an einer zusätzlichen Bearbeitungsstation ein vorstehender Lappen für die Schliessung der Einfüllöffnung

vorgebogen wird.

$\underline{Fig.1}$

$\underline{Fig.2}$

$\underline{Fig.3}$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 163 698 (A & S HENRY) * Seite 3, Zeile 5 - Zeile 114; Abbildungen * --- | 1,3,4 | B65B1/02 B31B19/00 B65D75/58 |
| A | GB-A-868 215 (J. DICKINSON) * Seite 3, Zeile 4 - Zeile 57; Ansprüche; Abbildungen * --- | 1,2 | |
| A | BE-A-656 359 (HABRA-WERK W. OTT) * Seite 6, Zeile 26 - Seite 8, Zeile 5; Abbildungen * --- | 1,3 | |
| D,A | FR-A-2 622 870 (R. GEISSLER) * Seite 4, Zeile 20 - Seite 5, Zeile 37; Abbildungen 1-4 * --- | 1 | |
| A | EP-A-0 340 817 (ROYAL SLUIS) * Spalte 2, Zeile 32 - Spalte 3, Zeile 25; Abbildungen * --- | 1 | |
| A | US-A-4 790 670 (M. BARBARO) ----- | | |

**RECHERCHIERTE SACHGEBIETE (Int. Cl.5)**

B65B
B31B
B65D

Der vorliegende Recherchenbericht wurde für alle Patentansprüche erstellt

| Recherchenort | Abschlußdatum der Recherche | Prüfer |
|---|---|---|
| DEN HAAG | 21 SEPTEMBER 1992 | JAGUSIAK A.H.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)